# EUROPEAN PATENT SPECIFICATION

(11) **EP 2 778 449 B1**
(45) Date of publication and mention of the grant of the patent: **15.04.2020**
(21) Application number: 12847570.4
(22) Date of filing: 12.10.2012
(51) Int. Cl.: F16C 33/82, F16C 33/66, F16J 15/43, F16C 33/78, F16C 19/54

(54) **SEALING DEVICE USING MAGNETIC FLUID**
ABDICHTUNGSVORRICHTUNG MIT EINER MAGNETISCHER FLÜSSIGKEIT
DISPOSITIF D'ÉTANCHÉITÉ UTILISANT UN FLUIDE MAGNÉTIQUE

(30) Priority: 08.11.2011 JP 2011244067
(43) Date of publication of application: 17.09.2014
(73) Proprietor: Eagle Industry Co., Ltd., Minato-ku Tokyo 105-8587 (JP)
(72) Inventor: HONDA Shigeki, Tokyo 105-8587 (JP)
(74) Representative: WSL Patentanwälte Partnerschaft mbB
(86) International application number: PCT/JP2012/076394
(87) International publication number: WO 2013/069403

(56) References cited:
- EP-A1- 0 267 632
- DE-A1- 10 044 056
- JP-A- S60 249 727
- JP-A- S63 101 520
- JP-A- 2011 174 547
- JP-A- 2011 174 547
- JP-U- H0 276 224
- JP-U- H0 276 224
- JP-U- S63 177 325
- JP-U- S63 177 325
- SU-A1- 655 858
- US-A- 4 043 616

## Description

### {Technical Field}

The present invention relates to a seal device employing magnetic fluid, and in particular relates to a seal device employing magnetic fluid, that is suitable as a seal for a rolling bearing to be used in a vacuum environment, such as in a production device for semiconductors, FPDs, solar cells, or the like.

### {Background Art}

In a production device for semiconductors or the like, a wafer is disposed inside a reaction chamber that is maintained under a vacuum by a vacuum pump, for example. A reactant gas is then introduced, and a thin film is formed by CVD or another process. It is necessary for transport of the workpiece inside the reaction chamber to take place in a hermetic state, and thus in the transport mechanism for this purpose, it is necessary for there to be complete hermetic separation between the arm section that actually grips the workpiece inside the reaction chamber, and the drive mechanism for transmitting power to the arm section from outside the reaction chamber. It is moreover necessary to reduce generation of dust and the like in the reaction chamber to the lowest possible level. For this reason, it is preferable for the drive mechanism of the arm section inside the reaction chamber to be a mechanism that does not generate abrasion powder, lubricant mist, or the like.

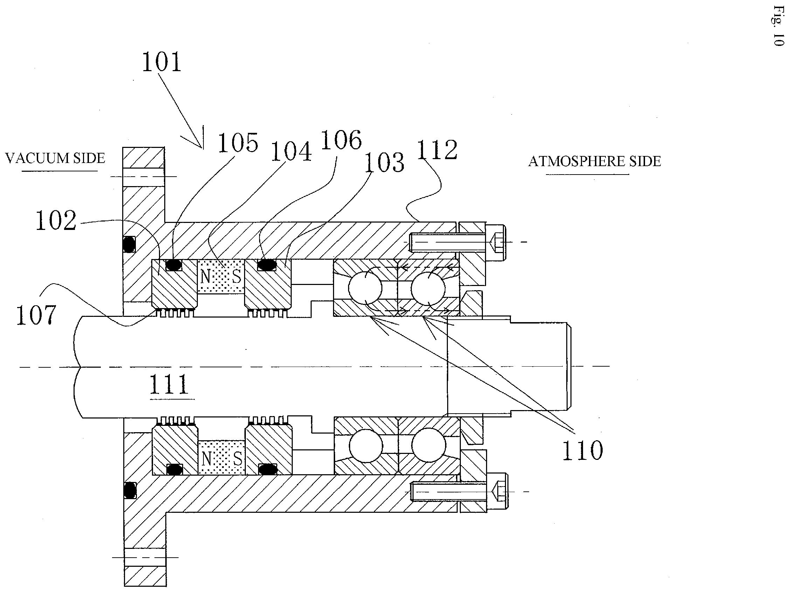

A magnetic fluid seal device 101 like that shown in FIG. 10, for example, is used in production devices for semiconductors and the like such as the aforedescribed. This magnetic fluid seal device employs magnetic circuit forming means constituted by a pair of pole pieces 102, 103, and a magnet 104 (magnetic force generating means) sandwiched by the pole pieces 102, 103. The pair of pole pieces 102, 103 are installed within a housing 112, with O-rings 105, 106 therebetween to improve sealing. The pole pieces 102, 103, the magnet 104, a magnetic fluid 107, and a shaft 111 made of magnetic material form a magnetic circuit, the magnetic fluid 107 being retained between the pole pieces 102, 103 and the distal ends of a plurality of annular raised portions formed on the shaft 111, affording a sealing function for retaining the vacuum side (the side targeted for sealing) in a vacuum state (hereinafter termed "Background Art 1").

On the atmosphere side of the magnetic fluid seal device 101, there is disposed a bearing 110 serving as a bearing part of single support type. This bearing 110 is typically disposed to the atmosphere side of the magnetic fluid seal device 101, to avoid the dust generated by the bearing 110. In most cases, an angular bearing or the like is employed as the bearing 110, and grease is used as the lubricant for the bearing 110.

Another known sealed type rolling bearing is shown in FIG. 11 (hereinafter termed "Background Art 2", see Patent Document 1, for example).

This Background Art 2 is equipped with a pair of seal bodies 133, 133 affixed to both sides of an outer race 131 of a rolling bearing 130, each seal body 133 comprising a permanent magnet 134 affixed to the outer race 131, and a yoke 135 affixed to the permanent magnet 134. A magnetic fluid is present in the gaps between the yokes 135 and an inner race 132, with the magnetic fluid sealing in a lubricant, such as grease or the like, between the seal bodies 133, 133.

However, in the aforedescribed Background Art 1 and 2, the grease or other lubricant is typically one of a base oil into which a thickener has been mixed, and gives rise to oil separation. This condition is exacerbated at high temperatures, and in the case of a bearing of single support type as shown in FIG. 10, the separated oil can flow out from the bearing 110, becoming admixed in the magnetic fluid 107, and giving rise to degradation of the magnetic fluid 107, which has adverse effects on pressure resistance and vacuum properties, and poses the problem of shorter life of the magnetic fluid seal device 101. In Background Art 2 as well, there arises a problem analogous to that in Background Art 1, of giving rise oil separation of the grease or other lubricant, and admixture thereof into the magnetic fluid (hereinafter termed "first problem").

Moreover, in Background Art 1, separated oil flowing out from the bearing 110 to the atmosphere side assumes a dry state, leading to high torque, or, in a worst case scenario, to rupture of the bearing. Furthermore, in cases in which the bearing is to be replenished with grease, it is necessary to disassemble the device, forcing a laborious procedure.

Meanwhile, in a magnetic fluid seal device of double support type having a bearing disposed on the vacuum side, a problem analogous to that with a single support type is encountered; furthermore, air bubbles and moisture may be released into the vacuum, diminishing the quality of the vacuum inside the vacuum chamber, and giving rise to pressure fluctuations viewed as problematic (hereinafter termed "second problem").

In view of the first problem of the aforedescribed Background Art 1, another known device is equipped with an oil receiving portion that dips down towards the housing side on the upper surface of the pole piece on the atmosphere side, so that in cases in which the grease gives rise to oil separation in the bearing, the separated oil flowing out from the bearing collects in the oil receiving portion at the bottom part of the bearing, preventing oil from becoming admixed in the magnetic fluid (hereinafter termed "Background Art 3", see Patent Document 2, for example).

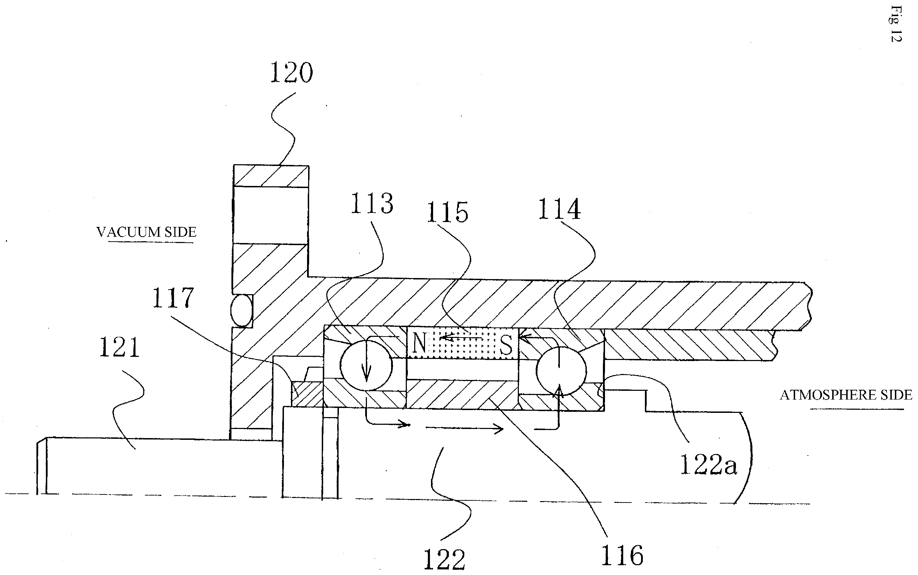

In view of the aforedescribed second problem, in another known design, shown in FIG. 12, for a rotation transmission device for transmitting power, such as rotary force, between the vacuum side and the atmosphere side which have been hermetically separated by a separating wall 120, a magnetic fluid is employed in place of grease, as the lubricant in first and second ball bearings 113, 114 that rotatably support a rotating output shaft 121 (hereinafter termed "Background Art 4", see Patent Document 3, for example). In this Background Art 4, the axial-direction positions of the outer race and the inner race of the first and second ball bearings 113, 114 are regulated by a ring-shaped first spacer 115 sandwiched between the outer races of the first and second ball bearings 113, 114, a second spacer 116 sandwiched between the inner races, a ring-shaped stepped surface 122a, and a nut 117; and in order to constitute the magnetic circuit, the first spacer 115 is formed from a ferromagnetic body such as ferritic or martensitic stainless steel, and is magnetized so that the ends thereof in the axial direction become the N pole and the S pole, and at least the shaft part 122 of the rotating output shaft 121 is formed from a magnetic body. Additionally, the ball bearings 113, 114 are commonly used magnetic bodies made of metal, the second spacer 116 is a non-magnetic body, and the surrounding areas of the contacting sections of the ball bearings 113, 114 is formed so as to be covered by a magnetic fluid.

SU 655 858 relates to a seal device employing a magnetic fluid. The seal device comprises a housing and a rotating shaft. Part of a magnetic flux provided by a permanent magnet passes through an outer ring of a bearing ball and an inner bearing race thereby attracting the magnetic fluid to form a lubricating film on the bearing ball. SU 655 858 discloses a device according to the respective preambles of claims 1 to 4.

### {Background Art}

### {Patent Documents}

Patent Document 1: Japanese Patent Application Laid-Open Publication 63-101520
Patent Document 2: Japanese Patent Application Laid-Open Publication 2003-254446
Patent Document 3: Japanese Patent Application Laid-Open Publication 11-166597
Patent Document 4 : Soviet Patent Application SU 655 858

### {Summary of Invention}

### {Problems To Be Solved By The Invention}

While the aforedescribed Background Art 3 has the effect of preventing admixed oil from giving rise to degradation of the magnetic fluid, so that there are no adverse effects on pressure resistance and vacuum properties and the life of the magnetic fluid seal device is prolonged. However, a problem is presented in that, in the case of a vacuum, air bubbles and moisture included in the oil that has collected in the oil receiving portion are released into the vacuum, so that the quality of the vacuum inside the vacuum chamber is reduced.

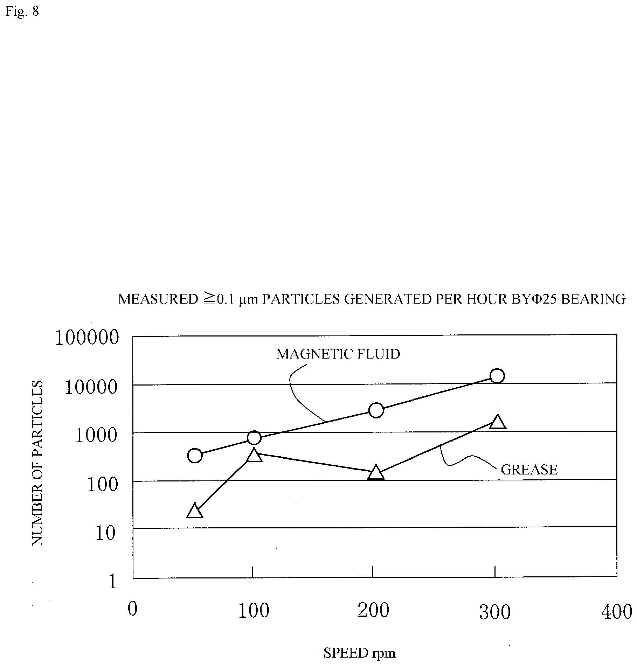

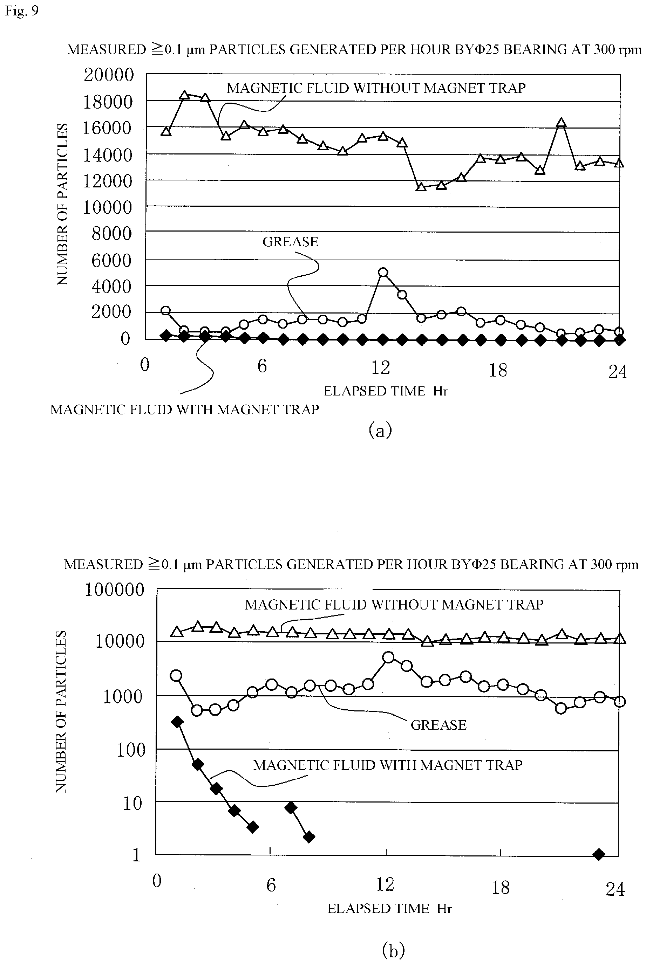

In the aforedescribed Background Art 4, a magnetic fluid is employed in place of grease as the lubricant, and the magnetic fluid is affixed by a magnetic circuit employing a magnet, which was potentially promising in terms of minimizing fine abrasion dust and other particles generated by the contacting sections of the ball bearings; however, when actually tested, the amount of particles generated was more than when grease is used as a lubricant, as shown in FIGS. 8 and 9.

In this test, in the case when the lubricant was grease, the bearing was furnished with a shield of known type, making it difficult for particles to be generated, whereas in the case when the lubricant was the magnetic fluid, the bearing was not furnished with a shield as in Fig. 12, and a magnet of lower magnetic force was employed.

The present invention is intended to solve problems such as the aforedescribed, it being an object thereof to provide a seal device employing magnetic fluid, whereby the effects of mist and particulate from the bearing part on the vacuum side can be prevented, and pressure fluctuations and reduced quality of the vacuum on the vacuum side can be prevented.

### {Means for Solving the Problem}

In order to achieve the object stated above, the device comprises a housing, a rotating shaft and a seal device employing magnetic fluid, wherein according to a first aspect of the present invention, the seal device is adapted for sealing off a vacuum side and an atmosphere side, and furnished between the housing and the rotating shaft, characterized in being equipped with a magnetic fluid seal furnished in the axial center portion within the housing, and rolling bearings furnished to both sides of the magnetic fluid seal;
a lubricated portion of the rolling bearing that, of said rolling bearings at either side, is the rolling bearing disposed on the vacuum side being filled with a magnetic fluid, and a magnet being installed on the vacuum side of an outer race; and
on the magnet at the opposite side thereof from the outer race of the rolling bearing, a ring-shaped yoke made of magnetic material being installed in a loose-fitting manner onto the rotating shaft, a magnetic circuit being formed on a path passing from the magnet through the ring-shaped yoke and the inner race, the balls, and the outer race of the rolling bearing, and returning to the magnet, wherein the magnetic circuit is configured to trap particles between the ring-shaped yoke and the inner race.

According to this feature, in an arrangement in which rolling bearings are furnished to both sides of the rotating shaft to prevent eccentricity of the rotating shaft, the occurrence of mist and particulates is prevented, pressure fluctuations and reduced quality of the vacuum on the vacuum side are prevented, and degradation of the magnetic fluid seal device is prevented, and the problem of high torque and drips at high temperatures, associated with the use of grease, is solved. Moreover, because the magnetic fluid seal is furnished at the center, particles are trapped by the magnetic fluid seal to the magnetic fluid seal side of the rolling bearing, therefore obviating the need to furnish a magnet trap to the magnetic fluid seal side of the rolling bearing.

The device comprising a housing, a rotating shaft, and a seal device employing magnetic fluid, wherein according to a second aspect of the present invention the seal device is adapted for sealing off a vacuum side and an atmosphere side, and furnished between a housing and a rotating shaft, characterized in being equipped with a magnetic fluid seal furnished in the axial center portion within the housing, and rolling bearings furnished to both sides of the magnetic fluid seal;
a lubricated portion of said rolling bearings at both sides being filled with a magnetic fluid;
in the rolling bearings at both sides, a magnet being installed on the vacuum side of an outer race of the rolling bearing disposed on the vacuum side, and a magnet being installed on the atmosphere side of an outer race of the rolling bearing atmosphere disposed on the atmosphere side; and
on each of the respective magnets at the opposite side thereof from the outer race of the rolling bearing, a ring-shaped yoke made of magnetic material being installed in a loose-fitting manner about the rotating shaft, a magnetic circuit being formed on a path passing from the magnet through the ring-shaped yoke and the inner race, the balls, and the outer race of the rolling bearing, and returning to the magnet, wherein the magnetic circuit is configured to trap particles between the ring-shaped yoke and the inner race.

According to this feature, in addition to the features of the first aspect, outflow of particles into the atmosphere can be prevented, and the life of the rolling bearing on the atmosphere side can be prolonged.

The device comprising a housing, a rotating shaft and a seal device employing magnetic fluid, wherein according to a third aspect of the present invention the seal device is adapted for sealing off a vacuum side and an atmosphere side, and furnished between a housing and a rotating shaft, characterized in being equipped with two rolling bearings disposed spaced apart so as to support the rotating shaft in double-supported fashion inside the housing;
a lubricated portion of the rolling bearing that, of said two rolling bearings, is the rolling bearing disposed on the vacuum side being filled with a magnetic fluid, and a magnet being installed on the vacuum side of an outer race; and
on the magnet at the opposite side thereof from the outer race of the rolling bearing, a ring-shaped yoke made of magnetic material being installed in a loose-fitting manner onto the rotating shaft, a magnetic circuit being formed on a path passing from the magnet through the ring-shaped yoke and the inner race, the balls, and the outer race of the rolling bearing, and returning to the magnet, wherein the magnetic circuit is configured to trap particles between the ring-shaped yoke and the inner race.

According to this feature, in an arrangement in which rolling bearings are furnished to both sides of the rotating shaft to prevent eccentricity of the rotating shaft, even in cases in which a magnetic fluid seal has not been furnished at the center of the rolling bearings, the occurrence of mist and particulate can be prevented, pressure fluctuations and reduced quality of the vacuum on the vacuum side is prevented, and degradation of the magnetic fluid seal device is prevented, and the problem of high torque and drips at high temperatures, associated with the use of grease, is solved.

The device comprising a housing, a rotating shaft, and a seal device employing magnetic fluid, wherein according to a fourth aspect of the present invention the seal device is adapted for sealing off a vacuum side and an atmosphere side, and furnished between a housing and a rotating shaft, characterized in being equipped with two rolling bearings disposed spaced apart so as to support the rotating shaft in double-supported fashion inside the housing;
a lubricated portion of said two rolling bearings at both sides being filled with a magnetic fluid;
in the two rolling bearings, a magnet being installed on the vacuum side of an outer race of the rolling bearing disposed on the vacuum side, and a magnet being installed on the atmosphere side of an outer race of the rolling bearing atmosphere disposed on the atmosphere side; and
on each of the respective magnets on the opposite side thereof from the outer race of the rolling bearing, a ring-shaped yoke made of magnetic material being installed in a loose-fitting manner about the rotating shaft, a magnetic circuit being formed on a path passing from the magnet through the ring-shaped yoke and the inner race, the balls, and the outer race of the rolling bearing, and returning to the magnet, wherein the magnetic circuit is configured to trap particles between the ring-shaped yoke and the inner race.

According to this feature, in addition to the features of the third aspect, outflow of particles into the atmosphere can be prevented, and the life of the rolling bearing on the atmosphere side can be prolonged.

The seal device employing magnetic fluid according to a fifth aspect of the present invention resides in a device according to any of the first to fourth aspects, characterized in a shield being furnished to the vacuum side of at least the rolling bearing that, of the rolling bearings, is the rolling bearing disposed to the vacuum side.

According to this feature, leakage of magnetic fluid from the interior of at least the rolling bearing disposed to the vacuum side, and infiltration of foreign matter into the interior of the bearing from the outside, can be prevented.

The seal device employing magnetic fluid according to a sixth aspect of the present invention resides in a device according to any of the first to fifth aspects, characterized in the rotating shaft being formed from a magnetic material; and a magnetic circuit, where the magnetic fluid is retained in the lubricated portion, is formed among the magnet, yoke, rotating shaft, and inner race, balls, and outer race of the rolling bearing.

According to this feature, a magnetic circuit can be formed to a sufficient extent, and easily.

The seal device employing magnetic fluid according to a seventh aspect of the present invention resides in a device according to any of the first to fifth aspects, characterized in the rotating shaft being formed from a magnetic material or non-magnetic material; and a magnetic circuit, where the magnetic fluid is retained in the lubricated portion, being formed among the magnet, yoke, and inner race, balls, and outer race of the rolling bearing.

According to this feature, in addition to the features of the sixth aspect, there is the advantage that the material of the rotating shaft is not limited to a magnetic material.

The seal device employing magnetic fluid according to an eighth aspect of the present invention resides in a device according to any of the first to seventh aspects, characterized in the cross sectional shape of the yoke being "I" shaped.

According to this feature, the yoke is easy to manufacture.

The seal device employing magnetic fluid according to a ninth aspect of the present invention resides in a device according to any of the first to seventh aspects, characterized in the cross sectional shape of the yoke being an "L" shape, arranged such that the vertical section of the "L" shape contacts a magnet, and the horizontal section opposing a surface of the rotating shaft.

According to this feature, particulate and the like can be trapped efficiently.

The seal device employing magnetic fluid according to a tenth aspect of the present invention resides in a device according to the ninth aspect, characterized in asperities being formed on the horizontal section of the "L" shaped yoke on the surface thereof opposing the surface of the rotating shaft.

According to this feature, particulate and the like can be trapped efficiently.

The seal device employing magnetic fluid according to an eleventh aspect of the present invention resides in a device according to any of the first to tenth aspects, characterized in the ring shaped yoke being furnished with a protruding portion on the side thereof facing towards the magnet, the protruding portion being furnished in the circumferential direction with a plurality of recessed portions of cylindrical or rectangular shape that open towards the rolling bearing outer race side, and magnets being fitted within the recessed portions.

According to this feature, provided that the yoke is manufactured to good dimensional accuracy, the rolling bearing can be seated with good dimensional accuracy using a simple structure, without the requirement of dimensional accuracy of the magnets, and can easily be applied to an existing rolling bearing.

### {Brief Description of Drawings}

FIG. 1 is a longitudinal cross sectional view showing a seal device employing magnetic fluid according to a first embodiment of the present invention;
FIG. 2 is a longitudinal cross sectional view showing a seal device employing magnetic fluid according to a second embodiment of the present invention;
FIG. 3 describes a magnetic circuit in the seal device employing magnetic fluid according to the first or second embodiment of the present invention, wherein (a) is a longitudinal cross sectional view of a case in which a magnet trap is furnished at one side of a rolling bearing on the vacuum side, and (b) is a longitudinal cross sectional view of a case in which magnet traps are furnished at both sides of a rolling bearing on the vacuum side;
FIG. 4 is a longitudinal cross sectional view showing a modification example of a yoke in the seal device employing magnetic fluid according to the first or second embodiment of the present invention;
FIG. 5 is a longitudinal cross sectional view showing another modification example of a yoke in the seal device employing magnetic fluid according to the first or second embodiment of the present invention;
FIG. 6 shows yet another modification example of a yoke in the seal device employing magnetic fluid according to the first or second embodiment of the present invention, wherein (a) is a longitudinal cross sectional view, and (b) is cross sectional view across A-A;
FIG. 7 is a longitudinal cross sectional view showing a seal device employing magnetic fluid according to a third embodiment of the present invention;
FIG. 8 is a diagram of measurements of the amount of particles generated per hour, in a case in which grease was employed as the lubricant in an ordinary rolling bearing, and in a case in which a magnetic fluid was employed as the lubricant, with the magnetic fluid affixed by a magnetic circuit employing a magnet;
FIG. 9 is a diagram of measurements of the amount of particles generated per hour in association with the passage of time, in a case in which grease was employed as the lubricant in an ordinary rolling bearing, in a case in which a magnetic fluid was employed as the lubricant, the magnetic fluid being affixed by a magnetic circuit employing a magnet, and in a case in which a magnetic fluid was employed as the lubricant, the magnetic fluid was affixed by a magnetic circuit employing a magnet, and a magnet trap according to the present invention (a magnet and a yoke) was installed;
FIG. 10 is a longitudinal cross sectional view showing Background Art 1;

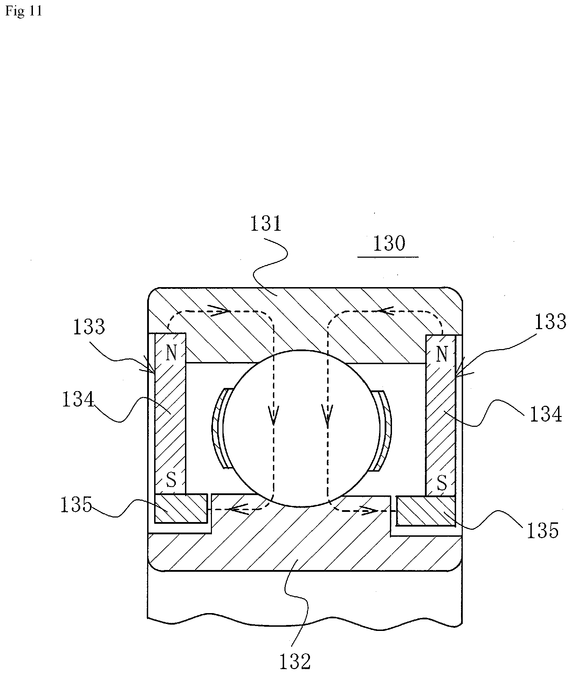

FIG. 11 is a longitudinal cross sectional view showing Background Art 2; and
FIG. 12 is a longitudinal cross sectional view showing Background Art 4.

### {Description of Embodiments}

The embodiments for carrying out the seal device employing magnetic fluid of the present invention are described in detail below while referring the drawings; however, the invention should not be construed as being limited thereto. Any of various changes, modifications, and improvements are possible on the basis of the knowledge of a person skilled in the art, without departing from the scope of the invention.

### {First embodiment}

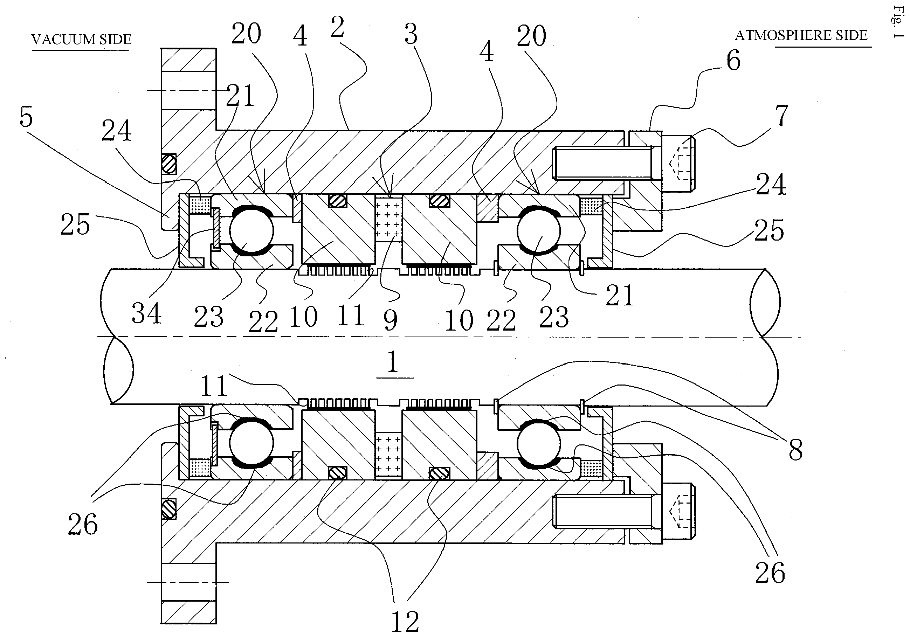

FIG. 1 is a longitudinal cross sectional view showing a seal device employing magnetic fluid according to a first embodiment of the present invention.

In FIG. 1, the left side is a vacuum side, and the right side is an atmosphere side.

In FIG. 1, the seal device employing magnetic fluid is installed between a housing 2 and a rotating shaft 1, and seals off the vacuum side and the atmosphere side.

A magnetic fluid seal 3 is disposed in the center portion within the housing 2, and rolling bearings 20, 20 are disposed to both sides of the magnetic fluid seal 3. A spacer 4 comprising a non-magnetic material is interposed between the magnetic fluid seal 3 and an outer race 21 or an inner race 2 of the rolling bearing 20 on the vacuum side, and between the magnetic fluid seal 3 and an outer race 21 of the rolling bearing 20 on the atmosphere side. At least the rolling bearing 20 that, of the rolling bearings 20, 20, is the rolling bearing disposed on the vacuum side, is furnished on the vacuum side thereof with a shield 34, which is a sealing cap obtained by press working of a metal sheet, preventing leakage of magnetic fluid from the interior of at least the rolling bearing 20 disposed on the vacuum side, as well as infiltration of foreign matter into the interior of the rolling bearing 20 from the outside. In FIG. 1, the shield 34 is furnished to the vacuum side of the rolling bearing 20 that has been disposed on the vacuum side; an additional one could be furnished at the atmosphere side of the rolling bearing 20 that has been disposed on the atmosphere side. The shield 34 is attached to the side surface of the outer race of the rolling bearing 20, and is disposed across a narrow gap from the inner race, with no contact therebetween.

In cases in which the lubricant of the rolling bearing 20 on the atmosphere side is grease, it will be better to furnish the shield 34; however, in a case in which the rolling bearings 20 on both the vacuum side and the atmosphere side use a magnetic fluid, there is no need to furnish the shield 34.

A step portion 5 is formed on the housing 2 at the left end on the inside peripheral side thereof, and [one of] the rolling bearings 20 is positioned abutting the step portion 5 so as to clamp a magnet 24 and a yoke 25 therebetween, [followed], in that order towards the right side, [by one of] the spacers 4, the magnetic fluid seal 3, [the other] spacer 4, and [the other] the rolling bearing 20, affixing these so as to be pressed against the step portion 5 by a restraining ring 6 and bolts 7, so as to clamp the magnet 24 and the yoke 25 therebetween.

Meanwhile, the rotating shaft 1 is furnished with retaining rings 8 at positions corresponding to the rolling bearing 20 on the atmosphere side, positioning the inner race 22 of the rolling bearing 20.

The magnetic fluid seal 3 is constituted by a magnet 9, and pole pieces 10, 10 disposed to both sides thereof. A plurality of convex portions 11 are formed on the outside peripheral surfaces of the rotating shaft 1 opposing the pole pieces 10, 10. O-rings 12 are installed about the outside peripheral surfaces of the pole pieces 10, 10, providing a seal with respect to the inside peripheral surface of the housing 2.

In FIG. 1, the rolling bearing 20 according to the first embodiment of the present invention is a bearing that utilizes the rolling of rolling elements, such as a ball bearing, a roller bearing, or the like, the outer race 21 being affixed to the housing 2 and the inner race 22 being affixed to the rotating shaft 1. Balls 23 are fitted between the outer race 21 and the inner race 22.

The rolling bearing 20 that, of the rolling bearings 20, 20 on both sides, is the one on the vacuum side, is filled in a lubricated portion thereof with a magnetic fluid, while the rolling bearing 20 on the atmosphere side is filled in a lubricated portion thereof with a magnetic fluid, or with an ordinary lubricant such as grease. In FIG. 1, there is shown a case in which the lubricated portions of the rolling bearings 20, 20 on both sides are filled with a magnetic fluid 26. Additionally employing the magnetic fluid 26 in the rolling bearing 20 on the atmosphere side prolongs the life.

FIG. 1 shows an example in which the side face at the vacuum side of the outer race 21 of the rolling bearing 20 on the vacuum side, and the atmosphere side of the outer race 21 of the rolling bearing 20 on the atmosphere side, are respectively furnished with magnets 24, the respective magnets 24 being furnished, at the opposite side from the outer race 21, with a ring-shaped yoke 25 comprising a non-magnetic material and in a loose-fitting manner about the rotating shaft 1. However, this is because the lubricated portions of the rolling bearings 20, 20 at both sides are filled with the magnetic fluid 26; in a case in which the lubricated portion of the rolling bearing 20 on the atmosphere side is filled with an ordinary lubricant, it would not be necessary to furnish the rolling bearing 20 on the atmosphere side with the magnet 24 and the yoke 25.

By furnishing magnet traps constituted by the magnet 24 and the yoke 25 at the vacuum side and the atmosphere side of the respective rolling bearings 20 as shown in FIG. 1, outflow of particles into the vacuum chamber and into the atmosphere can be prevented, and the life of the rolling bearings 20 can be prolonged.

Moreover, in the case of FIG. 1, a magnet trap is furnished at only one side of each of the respective rolling bearings 20; the reason for doing so is that the magnetic fluid seal 3 is furnished at the side thereof not furnished with the magnet trap, so particles are trapped between the plurality of convex portions 11 of the rotating shaft 1 and the pole pieces 10 which retain the magnetic fluid. However, in cases in which the magnetic fluid 26 employed in the rolling bearings 20 and the magnetic fluid of the magnetic fluid seal are different, and it is necessary to prevent admixture between them, it is preferable to furnish magnet traps at both sides of each of the respective rolling bearings 20.

The magnetic fluid 26 is employed in place of grease as the lubricant in the rolling bearings 20, to perform lubrication of sections requiring lubrication. In order to perform lubrication of sections requiring lubrication appropriately over an extended period of time, it is necessary to form a magnetic circuit for the purpose of retaining the magnetic fluid 26 in the sections requiring lubrication.

In the present embodiment, in order to form the magnetic circuit, the rotating shaft 1 is formed from a magnetic body, and the outer race 21, the inner race 22, and the balls 23 of the rolling bearings 20 are magnetic bodies made from a commonly-used metal.

Magnetic fluids are broadly classified into three types, i.e., water-based magnetic fluids, hydrocarbon oil-based magnetic fluids, and fluorinated oil-based magnetic fluids. Hydrocarbon oil-based magnetic fluids and fluorinated oil-based magnetic fluids are preferred due to their low vapor pressure and resistance to evaporation at high temperatures in high vacuum. However, the present invention is not limited to these; any magnetic fluid can be used, provided it has lubricating qualities.

Therefore, in the present invention, there is no limitation to hydrocarbon oil-based magnetic fluids and fluorinated oil-based magnetic fluids, and a magnetic fluid having lubricating qualities are simply called a magnetic fluid.

As the magnets 24, there may be employed permanent magnets comprising organic material filled with a metal or magnetic powder or the like; however, there is no limitation thereto, and any permanent magnet would be acceptable.

### {Second embodiment}

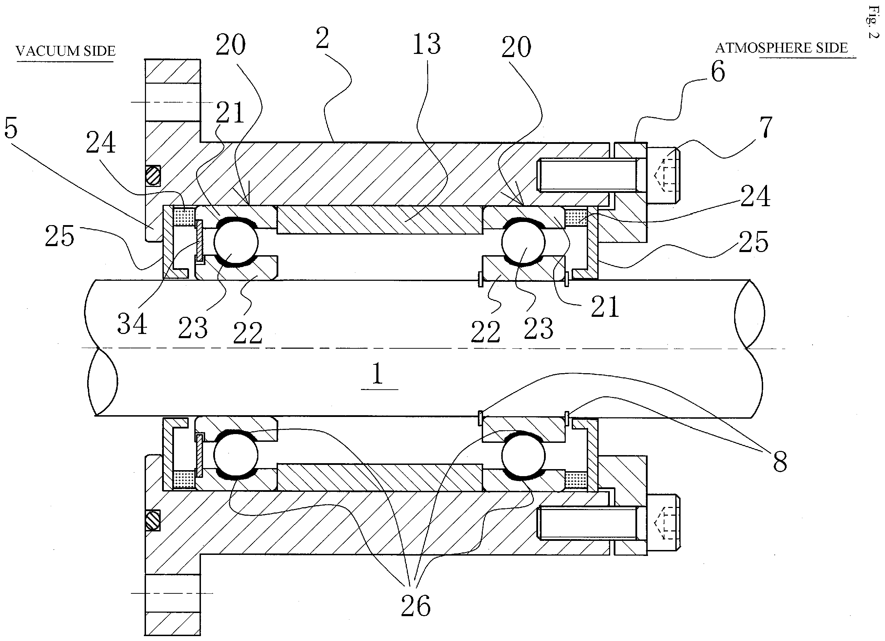

FIG. 2 is a longitudinal cross sectional view showing a seal device employing magnetic fluid according to a second embodiment of the present invention.

In FIG. 2, the left side is a vacuum side, and the right side is an atmosphere side.

The seal device employing magnetic fluid is installed between a housing 2 and a rotating shaft 1, and seals off the vacuum side and the atmosphere side.

In the seal device employing magnetic fluid, a spacer 13 comprising a non-magnetic material is disposed in the center portion within the housing 2, and rolling bearings 20, 20 are disposed to both sides of the spacer 13. At least the rolling bearing 20 that, of the rolling bearings 20, 20, is the rolling bearing 20 disposed on the vacuum side, is furnished on the vacuum side thereof with a shield 34, preventing leakage of magnetic fluid from the interior of at least the rolling bearing 20 disposed on the vacuum side, as well as infiltration of foreign matter into the interior of the rolling bearing 20 from the outside. In FIG. 2, the shield 34 is furnished to the vacuum side of the rolling bearing 20 that has been disposed on the vacuum side, but could be furnished at both sides of the rolling bearings on both sides. The shield 34 is attached to the side surface of the outer race of the rolling bearing 20, and is disposed across a narrow gap from the inner race, with no contact therebetween.

In cases in which the lubricant of the rolling bearing 20 on the atmosphere side is grease, it will be better to furnish the shield 34; however, in a case in which the rolling bearings 20 on both the vacuum side and the atmosphere side use a magnetic fluid, there is no need to furnish the shield 34.

A step portion 5 is formed on the housing 2 at the left end on the inside peripheral side thereof, and [one of] the rolling bearings 20 is positioned abutting the step portion 5 so as to clamp a magnet 24 and a yoke 25 therebetween, [followed], in that order towards the right side, by the spacer 13 and [the other] the rolling bearing 20, affixing these so as to be pressed against the step portion 5 by a restraining ring 6 and bolts 7, so as to clamp the magnet 24 and the yoke 25 therebetween.

Meanwhile, the rotating shaft 1 is furnished with retaining rings 8 at positions corresponding to the rolling bearing 20 on the atmosphere side, positioning the inner race 22 of the rolling bearing 20.

In FIG. 2, the rolling bearing 20 according to the second embodiment of the present invention is a bearing that utilizes rolling by rolling elements, such as a ball bearing, a roller bearing, or the like, the outer race 21 being affixed to the housing 2 and the inner race 22 being affixed to the rotating shaft 1. Balls 23 are fitted between the outer race 21 and the inner race 22.

The rolling bearing 20 that, of the rolling bearings 20, 20 on both sides, is the one on the vacuum side, is filled in a lubricated portion thereof with a magnetic fluid, while the rolling bearing 20 on the atmosphere side is filled in a lubricated portion thereof with a magnetic fluid, or with an ordinary lubricant such as grease. In FIG. 2, there is shown a case in which the lubricated portions of the rolling bearings 20, 20 on both sides are filled with a magnetic fluid 26. Employing the magnetic fluid 26 in the rolling bearing 20 on the atmosphere side as well prolongs the life.

FIG. 2 shows an example in which the side face at the vacuum side of the outer race 21 of the rolling bearing 20 on the vacuum side, and the atmosphere side of the outer race 21 of the rolling bearing 20 on the atmosphere side, are respectively furnished with magnets 24, with the respective magnets 24 being furnished, at the opposite side from the outer race 21, with a ring-shaped yoke 25 comprising a non-magnetic material and in a loose-fitting manner about the rotating shaft 1. However, this is because the lubricated portions of the rolling bearings 20, 20 at both sides are filled with the magnetic fluid 26; in a case in which the lubricated portion of the rolling bearing 20 on the atmosphere side is filled with an ordinary lubricant, it would not be necessary to furnish the rolling bearing 20 on the atmosphere side with the magnet 24 and the yoke 25.

By furnishing magnet traps constituted by the magnet 24 and the yoke 25 as shown in FIG. 2 at the vacuum side and the atmosphere side of the respective rolling bearings 20, outflow of particles into the vacuum chamber and into the atmosphere can be prevented, and the life of the rolling bearings 20 can be prolonged.

In FIG. 2, a magnet trap is furnished at only the vacuum side or atmosphere side of each of the respective rolling bearings 20; the reason for doing so is that the two rolling bearings are separated by a distance, and particles tending to flow out to the vacuum side or the atmosphere side become trapped by the magnet traps at both ends, and cannot flow out. However, outflow of particles to the vacuum side or the atmosphere side could be prevented to an even greater extent by furnishing magnet traps at both sides of the rolling bearings 20.

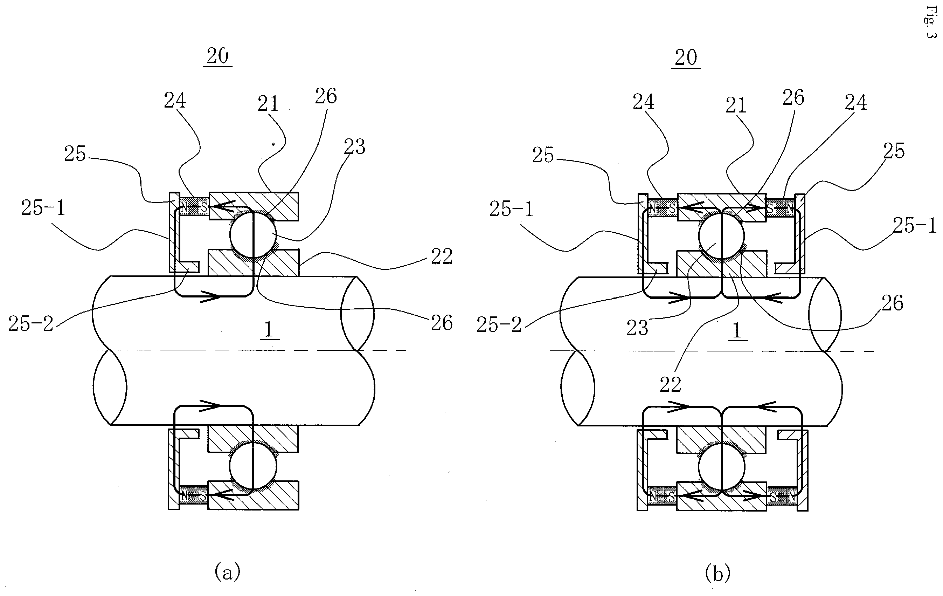

FIG. 3 describes a magnetic circuit in the seal device employing magnetic fluid according to the first or second embodiment of the present invention, wherein (a) is a longitudinal cross sectional view of a case in which a magnet trap comprising a magnet 24 and a yoke 25 is furnished at one side of the rolling bearing on the vacuum side, and (b) is a longitudinal cross sectional view of a case in which magnet traps comprising magnets 24 and yokes 25 are furnished at both sides of the rolling bearing on the vacuum side.

For convenience in describing the magnetic circuits, the shield 34 is omitted in FIGS. 3 to 7.

The rotating shaft 1 is formed from a magnetic body, and the outer race 21, inner race 22, and balls 23 of the rolling bearing 20 on the vacuum side are magnetic bodies as well, forming a magnetic circuit in the directions shown by arrows. Specifically, the magnetic circuit is formed so as to pass from the magnet 24 (a permanent magnet) through the yoke 25, the rotating shaft 1, the inner race 22, the balls 23, and the outer race 21, and return to the magnet 24. Therefore, the magnetic fluid 26 is retained between the balls 23 and the outer race 21, and between the balls 23 and the inner race 22.

The yoke 25 is shaped like a ring having an inside diameter slightly larger than the diameter of the rotating shaft 1 so as to fit freely about the rotating shaft 1; the cross sectional shape thereof is an "L" shape, with the section contacting the magnet 24 being the vertical section 25-1 of the "L," and the section opposing the surface of the rotating shaft 1 being the horizontal section 25-2 of the "L." The horizontal section 25-2 extends towards the inner race 22.

In FIG. 3 (a) and (b), the yoke 25 is disposed to at least the vacuum side of the magnet 24, specifically, to at least the vacuum side of the balls 23, and therefore even when particles of magnetic fluid or the like are generated by rolling of the balls 23, these become trapped by the yoke 25, preventing the particles from infiltrating to the vacuum side. There is a slight gap between the yoke 25 and the surface of the rotating shaft 1, and it is conceivable that particles could infiltrate to the vacuum side through this gap; however, due to formation of the magnetic circuit between the horizontal section 25-2 of the yoke 25 and the surface of the rotating shaft 1, the particles are efficiently trapped, and cannot infiltrate to the vacuum side.

In a case in which a magnet trap comprising the magnet 24 and the yoke 25 is furnished to each of both sides of the rolling bearing on the vacuum side, as in FIG. 3 (b), even when particles of magnetic fluid or the like are generated by rolling of the balls 23, these become trapped by the yokes 25 at both sides, preventing infiltration of the particles to the vacuum side and to the magnetic fluid seal 3 side. In a case in which a magnet trap comprising the magnet 24 and the yoke 25 is furnished to each of both sides of the rolling bearing on the atmosphere side, release of particles to the magnetic fluid seal 3 side and to the atmosphere side can be prevented.

The magnetic circuits of the magnet traps comprising the magnets 24 and the yokes 25 furnished to the atmosphere side of the balls 23 of the rolling bearing are formed as shown by the arrows at the right side in FIG. 3 (b).

### {Yoke modification}

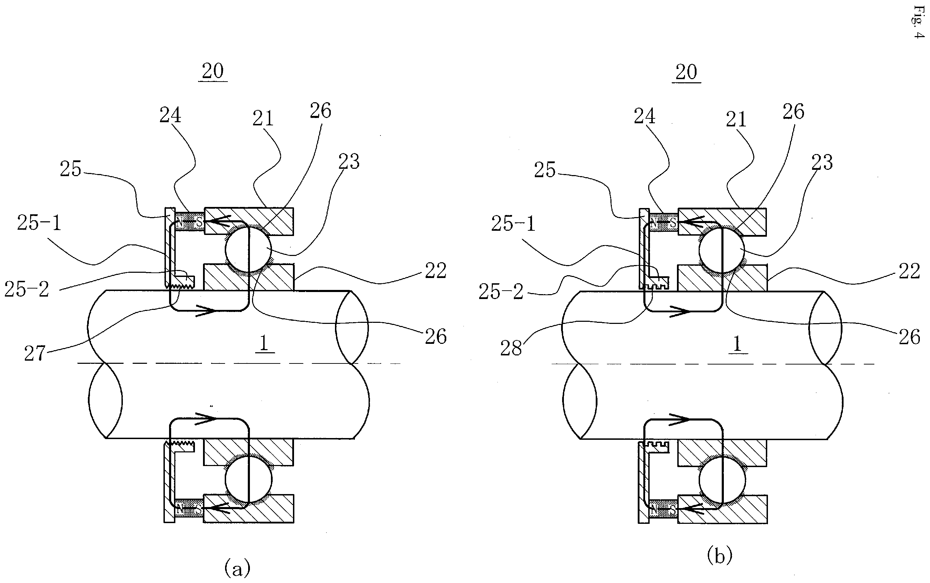

FIG. 4 is a longitudinal cross sectional view showing a modification of a yoke in the seal device employing magnetic fluid according to the first and second embodiment of the present invention.

In FIG. 4, the ring-shaped yoke 25 has a cross sectional shape which is an "L" shape, with the section contacting the magnet 24 being the vertical section 25-1 of the "L," and the section opposing the surface of the rotating shaft 1 being the horizontal section 25-2 of the "L." The horizontal section 25-2 extends towards the inner race 22.

The component in FIG. 4 (a) has saw tooth asperities 27 formed on the horizontal section 25-2 of the yoke 25, on the surface thereof opposing the surface of the rotating shaft 1.

The component in FIG. 4 (b) has square-thread asperities 28 formed on the horizontal section 25-2 of the yoke 25, on the surface thereof opposing the surface of the rotating shaft 1.

Through formation of saw tooth asperities 27 or square-thread asperities 28 on the horizontal section 25-2 of the "L" on the surface thereof opposing the surface of the rotating shaft 1 in this manner, the section opposing the surface of the rotating shaft 1 can efficiently trap particles.

### {Additional yoke modification}

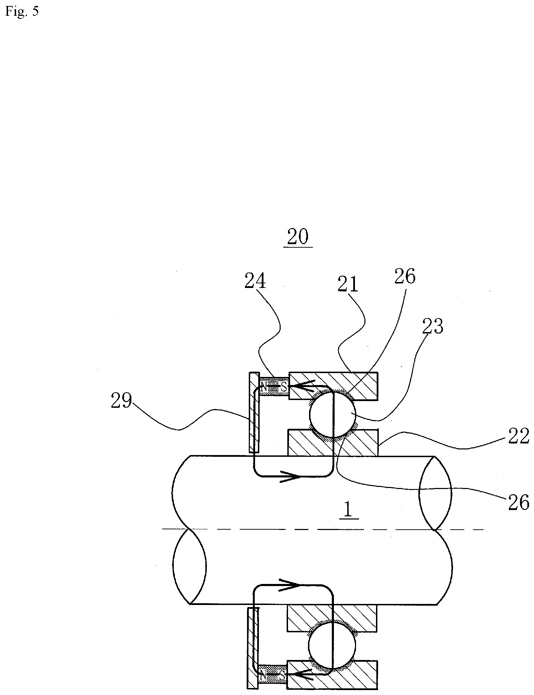

FIG. 5 is a longitudinal cross sectional view showing another modification of a yoke in the seal device employing magnetic fluid according to the first or second embodiment of the present invention.

In FIG. 5, a ring-shaped yoke 29 has a cross sectional shape which is an "I" shape. In the present example, it is easy to manufacture the yoke 26 due to its simple cross sectional shape.

### {Further additional yoke modification}

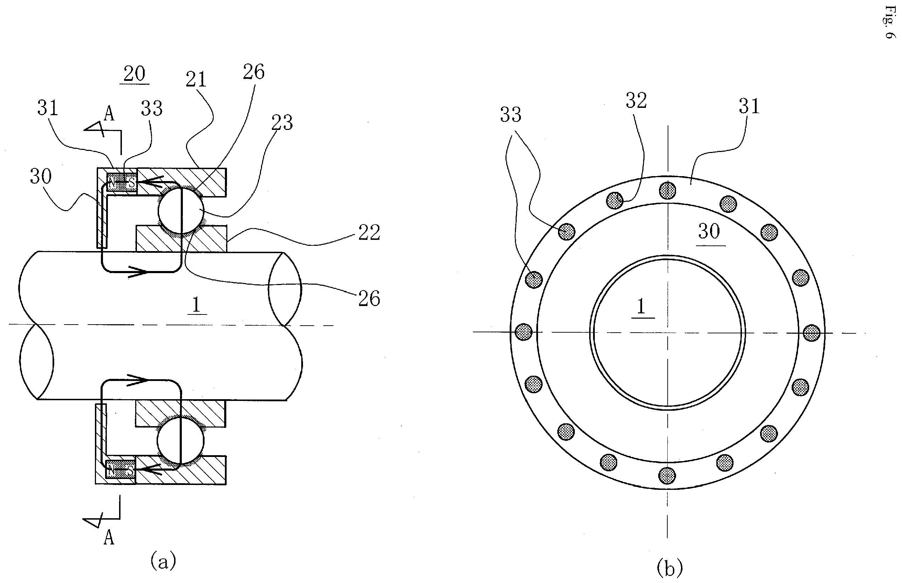

FIG. 6 shows yet another modification of a yoke in the seal device employing magnetic fluid according to the first or second embodiment of the present invention, wherein (a) is a longitudinal cross sectional view, and (b) is an A-A cross sectional view.

In FIG. 6, a ring-shaped yoke 30 has a cross sectional shape which is an "I" shape identical to that in FIG. 5. A protruding portion 31 is furnished on the side facing magnets 33 of the yoke 30, the protruding portion 31 being furnished in the circumferential direction with a plurality of recessed portions 32 of cylindrical or rectangular shape that open towards the rolling bearing outer race side. The cylindrical magnets 33 are fitted respectively within the recessed portions 32.

By adopting a structure in which the magnets 33 are retained by the yoke 30, provided that the yoke 30 is manufactured to good dimensional accuracy, the rolling bearing 20 can be seated with good dimensional accuracy using a simple structure, without the requirement of dimensional accuracy of the magnets 33, and can easily be applied to an existing rolling bearing.

In FIG. 6, the cross sectional shape of the ring-shaped yoke 30 is an "I" shape, but there is no limitation thereto, and the shapes shown in the other embodiments are acceptable as well.

### {Third embodiment}

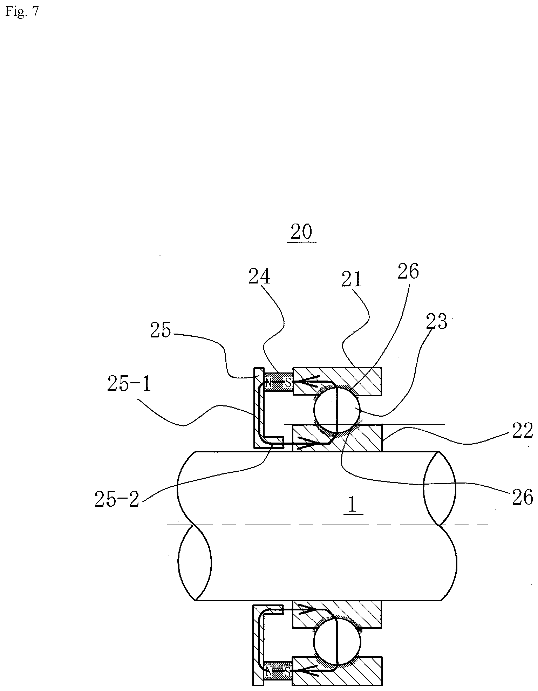

FIG. 7 is a longitudinal cross sectional view showing a seal device employing magnetic fluid according to a third embodiment of the present invention.

The rolling bearing 20 according to the third embodiment has the same basic structure as in the first embodiment; in FIG. 7, the same reference signs as used in FIG. 3 are used to identify components that are the same as those in FIG. 3. The following description primarily relates to sections of difference from the first embodiment.

In FIG. 7, a magnetic circuit for retaining a magnetic fluid in a section requiring lubrication is formed as shown by the arrows. Specifically, the magnetic circuit is formed on a path passing from the magnet 24 (a permanent magnet) through the yoke 25, the inner race 22, the balls 23, and the outer race 21, and returning to the magnet 24. Therefore, either the rotating shaft 1 is fabricated from non-magnetic material, or the horizontal section 25-2 of the ring-shaped yoke 25 which opposes the surface of the rotating shaft 1 is formed so as to be spaced apart from the surface of the rotating shaft 1.

A resultant advantage is that the material of the rotating shaft 1 is not limited to a magnetic material.

In the seal device in the present third embodiment, trapping takes place between the horizontal section 25-2 of the ring-shaped yoke 25 and the inner race 22.

FIG. 8 gives measurements of the amount of particles generated per hour, in a case in which grease was employed as the lubricant in an ordinary rolling bearing, and in a case in which a magnetic fluid was employed as the lubricant, with the magnetic fluid affixed by a magnetic circuit employing a magnet (herein termed "a case of magnetic fluid without a magnet trap").

In order to verify the trapping effect of the magnet trap in the case in which the magnetic fluid was affixed by a magnetic circuit, the measurement test was performed at a weak magnetic field setting, creating a state in which particles were easily generated. Moreover, the bearings employing magnetic fluid were not furnished with shields, whereas the bearings employing grease were furnished with shields, producing conditions in which particles of grease were not readily generated.

The result of measurements of bearings 25 mm in diameter taken while rotating within a range of 50 rpm to 300 rpm showed that the number of particles 0.1 µm or greater in size generated per hour increased with greater rotation speed, and that at each rotation speed, the number of particles generated was increased in the case of magnetic fluid without a magnet trap, as compared to the case where grease was employed.

FIG. 9 gives measurements of the amount of particles generated per hour in association with the passage of time, in a case in which grease was employed as the lubricant in an ordinary rolling bearing, in a case of magnetic fluid without a magnet trap, and in a case in which a magnetic fluid was employed as the lubricant, the magnetic fluid was affixed by a magnetic circuit employing a magnet, and a ring-shaped yoke (magnet trap) according to the present invention was installed (herein termed "a case of magnetic fluid with a magnet trap"). For the measurements, bearings 25 mm in diameter were employed, rotating them at 300 rpm.

In this measurement test as well, in order to verify the trapping effect of the magnet trap in the case in which the magnetic fluid was affixed by a magnetic circuit, the test was performed at a weak magnetic field setting, creating a state in which particles were easily generated. Moreover, the bearings employing magnetic fluid were not furnished with shields, whereas the bearings employing grease were furnished with shields, producing conditions in which particles of grease were not readily generated.

FIG. 9 (a) and (b) show the same measurement results, but FIG. 9 (b) is a single logarithmic graph, in order to more clearly show the numbers of particles generated in the case of magnetic fluid with a magnet trap, and in the case where grease was employed.

From FIG. 9 (a), it may be seen that, in the case of magnetic fluid without a magnet trap, the number of particles generated per hour was by far greater, irrespective of the passage of time. In the case in which grease was employed as the lubricant in an ordinary rolling bearing, the number of particles generated per hour was fewer (about one-eighth) as compared with the case of magnetic fluid without a magnet trap, but the number generated suddenly spiked around the 12-hour mark, and in other time slots of fewer [numbers of particles] as well, approximately 1,000 [particles] were generated per hour.

In contrast to this, as will be appreciated from FIG. 9 (b), in the case of magnetic fluid with a magnet trap, approximately 500 [particles] were generated per hour immediately following startup of operation, and [the numbers] declined sharply with the passage of time, dropping to a level on the order of a few [particles] per hour after several hours, with substantially no [particles] generated thereafter.

From the measurement results, it may be appreciated that in a rolling bearing in which the ring-shaped yoke (magnet trap) of the present invention has been installed, trapping of particles by the yoke takes place in a reliable manner.

### {Reference Signs List}

- 1: Rotating shaft
- 2: Housing
- 3: Magnetic fluid seal
- 4: Spacer
- 5: Step portion
- 6: Restraining ring
- 7: Bolt
- 8: Retaining ring
- 9: Magnet
- 10: Pole piece
- 11: Convex portions
- 12: O-ring
- 13: Spacer
- 20: Rolling bearing
- 21: Outer race
- 22: Inner race
- 23: Balls
- 24: Magnet
- 25: Yoke
- 26: Magnetic fluid
- 27: Saw tooth asperities
- 28: Square-thread asperities
- 29: Yoke
- 30: Yoke
- 31: Protruding portion
- 32: Recessed portions
- 33: Magnets
- 34: Shield

## Claims

1. A device comprising a housing (2), a rotating shaft (1) and a seal device employing magnetic fluid, the seal device adapted for sealing off a vacuum side and an atmosphere side, and furnished between the housing (2) and the rotating shaft (1),
the seal device being equipped with a magnetic fluid seal (3) furnished in the axial center portion within said housing (2), and rolling bearings (20) furnished to both sides of said magnetic fluid seal (3);
a lubricated portion of the rolling bearing (20) that, of said rolling bearings (20) at either side, is the rolling bearing (20) disposed on the vacuum side being filled with a magnetic fluid (26), and a magnet (24) being installed on the vacuum side of an outer race (21); **characterised by**
on the opposite side of said magnet (24) from the outer race (21) of said rolling bearing (20), a ring-shaped yoke (25) made of magnetic material being installed in a loose-fitting manner on the rotating shaft (1); and a magnetic circuit being formed on a path passing from the magnet through the ring-shaped yoke and the inner race, the balls, and the outer race of the rolling bearing, and returning to the magnet, wherein the magnetic circuit is configured to trap particles between the ring-shaped yoke and the inner race.

2. A device comprising a housing (2), a rotating shaft (1), and a seal device employing magnetic fluid, the seal device adapted for sealing off a vacuum side and an atmosphere side, and furnished between the housing (2) and the rotating shaft (1),
the seal device being equipped with a magnetic fluid seal (3) furnished in the axial center portion within said housing, and rolling bearings (20) furnished to both sides of said magnetic fluid seal (3);
a lubricated portion of said rolling bearings (20) at both sides being filled with a magnetic fluid (26);
in said rolling bearings (20) at both sides, a magnet (24) being installed on the vacuum side of an outer race (21) of the rolling bearing (20) disposed on the vacuum side, and a magnet (24) being installed on the atmosphere side of an outer race (21) of the rolling bearing atmosphere disposed on the atmosphere side; **characterised by**
on each of said respective magnets (24) at the opposite side thereof from the outer race (21) of the rolling bearing (20), a ring-shaped yoke (25) made of magnetic material being installed in a loose-fitting manner about the rotating shaft (1); and
a magnetic circuit being formed on a path passing from the magnet through the ring-shaped yoke and the inner race, the balls, and the outer race of the rolling bearing, and returning to the magnet, wherein the magnetic circuit is configured to trap particles between the ring-shaped yoke and the inner race.

3. A device comprising a housing (2), a rotating shaft (1) and a seal device employing magnetic fluid, the seal device adapted for sealing off a vacuum side and an atmosphere side, and furnished between the housing (2) and the rotating shaft (1),
the seal device being equipped with two rolling bearings (20) disposed spaced apart so as to support said rotating shaft (1) in double-supported fashion inside said housing (2);
a lubricated portion of the rolling bearing (20) that, of said two rolling bearings (20), is the rolling bearing (20) disposed on the vacuum side being filled with a magnetic fluid (26), and a magnet (24) being installed on the vacuum side of an outer race (21); **characterised by**
on said magnet (24) at the opposite side thereof from the outer race (21) of the rolling bearing (20), a ring-shaped yoke (25) made of magnetic material being installed in a loose-fitting manner onto the rotating shaft (1); and
a magnetic circuit being formed on a path passing from the magnet through the ring-shaped yoke and the inner race, the balls, and the outer race of the rolling bearing, and returning to the magnet, wherein the magnetic circuit is configured to trap particles between the ring-shaped yoke and the inner race.

4. A device comprising a housing (2), a rotating shaft (1) and a seal device employing magnetic fluid, the seal device adapted for sealing off a vacuum side and an atmosphere side, and furnished between the housing (2) and the rotating shaft (1),
the seal device being equipped with two rolling bearings (20) disposed spaced apart so as to support said rotating shaft (1) in double-supported fashion inside said housing (2);
a lubricated portion of said two rolling bearings (20) at both sides being filled with a magnetic fluid (26);
in said two rolling bearings (20), a magnet (24) being installed on the vacuum side of an outer race (21) of the rolling bearing (20) disposed on the vacuum side, and a magnet (24) being installed on the atmosphere side of an outer race (21) of the rolling bearing (20) atmosphere disposed on the atmosphere side; **characterised by**
on each of said respective magnets (24) on the opposite side thereof from the outer race (21) of said rolling bearing (20), a ring-shaped yoke (25) made of magnetic material being installed in a loose-fitting manner about the rotating shaft (1); and
a magnetic circuit being formed on a path passing from the magnet through the ring-shaped yoke and the inner race, the balls, and the outer race of the rolling bearing, and returning to the magnet, wherein the magnetic circuit is configured to trap particles between the ring-shaped yoke and the inner race.

5. The device according to any one of claims 1 to 4, **characterized in** a shield (34) being furnished to the vacuum side of at least the rolling bearing (20) that, of said rolling bearings (20), is the rolling bearing (20) disposed to said vacuum side.

6. The device according to any one of claims 1 to 5, **characterized in** the cross sectional shape of said yoke (25) being "I" shaped.

7. The device according to any one of claims 1 to 6, **characterized in** the cross sectional shape of said yoke (25) being an "L" shape, arranged such that the vertical section (25-1) of said "L" shape contacts a magnet (24), and the horizontal section (25-2) opposing a surface of said rotating shaft (1).

8. The device according to claim 7, **characterized in** asperities (27, 28) being formed on the horizontal section (25-2) of said "L" shaped yoke (25) on the surface thereof opposing the surface of said rotating shaft (1).

9. The device according to any one of claims 1 to 8, **characterized in** said ring shaped yoke (30) being furnished with a protruding portion (31) on the side thereof facing towards said magnet (33), said protruding portion (31) being furnished in the circumferential direction with a plurality of recessed portions (32) of cylindrical or rectangular shape that open towards said rolling bearing outer race side, and magnets (33) being fitted within said recessed portions (32).

## Patentansprüche

1. Vorrichtung mit einem Gehäuse (2), einem sich drehenden Schaft (1) und einer Dichtungsvorrichtung, welche ein magnetisches Fluid verwendet, wobei die Dichtungsvorrichtung dafür ausgelegt ist, eine Vakuumseite und eine Atmosphärenseite abzudichten, und zwischen dem Gehäuse (2) und dem sich drehenden Schaft (1) vorgesehen ist,
wobei die Dichtungsvorrichtung mit einer magnetischen Fluiddichtung (3), welche in dem axialen mittleren Abschnitt innerhalb des Gehäuses (2) vorgesehen ist, und Wälzlagern (20), welche an beiden Seiten der magnetischen Fluiddichtung (3) vorgesehen sind, ausgestattet ist,
wobei ein geschmierter Abschnitt des Wälzlagers (20), welches von den Wälzlagern (20) auf jeder Seite das Wälzlager (20) ist, welches auf der Vakuumseite mit einem magnetischen Fluid (26) gefüllt ist, und ein Magnet (24), welcher auf der Vakuumseite eines Außenrings (21) angeordnet ist, **dadurch gekennzeichnet ist, dass**
auf der gegenüberliegenden Seite des Magneten (24) von dem Außenring (21) des Wälzlagers (20) ein ringförmiger Bügel (25) aus einem magnetischen Material in einer losen Passform auf dem sich drehenden Schaft (1) befestigt ist, und ein Magnetkreis auf einem Pfad gebildet ist, welcher von dem Magneten durch den ringförmigen Bügel und den inneren Ring, die Kugeln und den äußeren Ring des Wälzlagers verläuft, und zu dem Magneten zurückkehrt, wobei der Magnetkreis so ausgebildet ist, dass er Partikel zwischen dem ringförmigen Bügel und dem inneren Ring einfängt.

2. Vorrichtung mit einem Gehäuse (2), einem sich drehenden Schaft (1) und einer Dichtungsvorrichtung, welche ein magnetisches Fluid verwendet, wobei die Dichtungsvorrichtung dafür ausgelegt ist, eine Vakuumseite und eine Atmosphärenseite abzudichten, und zwischen dem Gehäuse (2) und dem sich drehenden Schaft (1) vorgesehen ist,
wobei die Dichtungsvorrichtung mit einer magnetischen Fluiddichtung (3), welche in dem axialen mittleren Abschnitt innerhalb des Gehäuses vorgesehen ist, und Wälzlagern (20), welche an beiden Seiten der magnetischen Fluiddichtung (3) vorgesehen sind, ausgestattet ist,
wobei ein geschmierter Abschnitt der Wälzlager (20) an beiden Seiten mit einem magnetischen Fluid (26) gefüllt ist,
wobei in den Wälzlagern (20) an beiden Seiten ein Magnet (24) angeordnet ist, welcher auf der Vakuumseite eines äußeren Rings (21) des auf der Vakuumseite angeordneten Wälzlagers (20) angeordnet ist, und wobei ein Magnet (24) auf der Atmosphärenseite eines äußeren Rings (21) des Wälzlagers angeordnet ist, welches auf der Atmosphärenseite angeordnet ist, **dadurch gekennzeichnet, dass**
auf jedem der entsprechenden Magnete (24) an der gegenüberliegenden Seite davon von dem Außenring (21) des Wälzlagers (20) ein ringförmiger Bügel (25) aus einem magnetischen Material in einer losen Passform um den sich drehenden Schaft (1) angeordnet ist, und
ein Magnetkreis auf einem Pfad gebildet ist, welcher von dem Magneten durch den ringförmigen Bügel und den inneren Ring, die Kugeln und den äußeren Ring des Wälzlagers verläuft, und zu dem Magneten zurückkehrt, wobei der Magnetkreis so ausgebildet ist, dass er Partikel zwischen dem ringförmigen Bügel und dem inneren Ring einfängt.

3. Vorrichtung mit einem Gehäuse (2), einem sich drehenden Schaft (1) und einer Dichtungsvorrichtung, welche ein magnetisches Fluid verwendet, wobei die Dichtungsvorrichtung dafür ausgelegt ist, eine Vakuumseite und eine Atmosphärenseite abzudichten, und zwischen dem Gehäuse (2) und dem sich drehenden Schaft (1) vorgesehen ist,
wobei die Dichtungsvorrichtung mit zwei Wälzlagern (20) ausgestattet ist, welche in einer doppelgelagerten Art im Inneren des Gehäuses (2) beabstandet angeordnet sind, um so den sich drehenden Schaft (1) zu stützen,
wobei ein geschmierter Abschnitt des Wälzlagers (20), welches von den beiden Wälzlagern (20) das Wälzlager (20) ist, welches auf der Vakuumseite mit einem magnetischen Fluid (26) gefüllt ist, und ein Magnet (24), welcher auf der Vakuumseite eines äußeren Rings (21) angeordnet ist, **dadurch gekennzeichnet ist, dass**
auf dem Magneten (24) auf der gegenüberliegenden Seite davon von dem äußeren Ring (21) des Wälzlagers (20) ein ringförmiger Bügel (25) aus einem magnetischen Material in einer losen Passform auf dem sich drehenden Schaft (1) befestigt ist, und ein Magnetkreis auf einem Pfad gebildet ist, welcher von dem Magneten durch den ringförmigen Bügel und den inneren Ring, die Kugeln und den äußeren Ring des Wälzlagers verläuft, und zu dem Magneten zurückkehrt, wobei der Magnetkreis so ausgebildet ist, dass er Partikel zwischen dem ringförmigen Bügel und dem inneren Ring einfängt.

4. Vorrichtung mit einem Gehäuse (2), einem sich drehenden Schaft (1) und einer Dichtungsvorrichtung, welche ein magnetisches Fluid verwendet, wobei die Dichtungsvorrichtung dafür ausgelegt ist, eine Vakuumseite und eine Atmosphärenseite abzudichten, und zwischen dem Gehäuse (2) und dem sich drehenden Schaft (1) vorgesehen ist,
wobei die Dichtungsvorrichtung mit zwei Wälzlagern (20) ausgestattet ist, welche in einer doppelgelagerten Art im Inneren des Gehäuses (2) beabstandet angeordnet sind, um so den sich drehenden Schaft (1) zu stützen,
wobei ein geschmierter Abschnitt der beiden Wälzlager (20) an beiden Seiten mit einem magnetischen Fluid (26) gefüllt ist,
wobei in den beiden Wälzlagern (20) ein Magnet (24) auf der Vakuumseite eines äußeren Rings (21) des Wälzlagers (20) angeordnet ist, welches auf der Vakuumseite angeordnet ist, und wobei ein Magnet (24) auf der Atmosphärenseite eines äußeren Rings (21) des Wälzlagers angeordnet ist, welches auf der Atmosphärenseite angeordnet ist, **dadurch gekennzeichnet, dass**
auf jedem der entsprechenden Magnete (24) an der gegenüberliegenden Seite davon von dem Außenring (21) des Wälzlagers (20) ein ringförmiger Bügel (25) aus einem magnetischen Material in einer losen Passform um den sich drehenden Schaft (1) angeordnet ist, und
ein Magnetkreis auf einem Pfad gebildet ist, welcher von dem Magneten durch den ringförmigen Bügel und den inneren Ring, die Kugeln und den äußeren Ring des Wälzlagers verläuft, und zu dem Magneten zurückkehrt, wobei der Magnetkreis so ausgebildet ist, dass er Partikel zwischen dem ringförmigen Bügel und dem inneren Ring einfängt.

5. Vorrichtung nach einem der Ansprüche 1 bis 4, **dadurch gekennzeichnet, dass** in einem Schild (34), welches an der Vakuumseite von mindestens dem Wälzlager (20) vorgesehen ist, welches das Wälzlager (20) der Wälzlager (20) ist, welches an der Vakuumseite angeordnet ist.

6. Vorrichtung nach einem der Ansprüche 1 bis 5, **dadurch gekennzeichnet, dass** die Querschnittsform des Bügels (25) "I"-förmig ist.

7. Vorrichtung nach einem der Ansprüche 1 bis 6, **dadurch gekennzeichnet, dass** die Querschnittsform des Bügels (25) "L"-förmig ist, welcher so angeordnet ist, dass der vertikale Abschnitt (25-1) der "L"-Form mit dem Magneten (24) verbunden ist, und der horizontale Abschnitt (25-2) einer Fläche des sich drehenden Schafts (1) gegenüberliegt.

8. Vorrichtung nach Anspruch 7, **dadurch gekennzeichnet, dass** Unebenheiten (27, 28) auf dem horizontalen Abschnitt (25-2) des "L"-förmigen Bügels (25) auf der Fläche davon, welche der Fläche des sich drehenden Schafts (1) gegenüberliegt, gebildet sind.

9. Vorrichtung nach einem der Ansprüche 1 bis 8, **dadurch gekennzeichnet, dass** der ringförmige Bügel (30) mit einem vorstehenden Abschnitt (31) auf der Seite, welche gegenüber dem Magneten (33) liegt, wobei der vorstehende Abschnitt (31) in Umfangsrichtung mit einer Mehrzahl von vertieften Abschnitten (32) mit zylindrischer oder rechteckiger Form vorgesehen ist, welche sich zu der Außenringseite der Wälzlager hin öffnen, und Magneten (33), welche innerhalb der vertieften Abschnitte (32) angeordnet ist, ausgestattet ist.

## Revendications

1. Dispositif comprenant un boîtier (2), un arbre rotatif (1) et un dispositif d'étanchéité utilisant un fluide magnétique, le dispositif d'étanchéité étant adapté pour sceller un côté sous vide et un côté sous atmosphère, et disposé entre le boîtier (2) et l'arbre rotatif (1),
le dispositif d'étanchéité étant équipé d'un joint à fluide magnétique (3) disposé dans la partie centrale axiale à l'intérieur dudit boîtier (2), et de roulements à billes (20) disposés des deux côtés dudit joint à fluide magnétique (3) ;
une partie lubrifiée du roulement à billes (20) qui, parmi lesdits roulements à billes (20) de chaque côté, est le roulement à billes (20) disposé sur le côté sous vide étant remplie d'un fluide magnétique (26), et un aimant (24) étant installé sur le côté sous vide d'un chemin extérieur (21) ; **caractérisé en ce que**
sur le côté opposé dudit aimant (24) par rapport au chemin extérieur (21) dudit roulement à billes (20), une culasse de forme annulaire (25) constituée de matériau magnétique étant installée de manière lâche sur l'arbre rotatif (1) ; et un circuit magnétique étant formé sur un trajet passant de l'aimant à travers la culasse de forme annulaire et le chemin intérieur, les billes et le chemin extérieur du roulement à billes, et revenant jusqu'à l'aimant, dans lequel le circuit magnétique est configuré pour piéger des particules entre la culasse de forme annulaire et le chemin intérieur.

2. Dispositif comprenant un boîtier (2), un arbre rotatif (1), et un dispositif d'étanchéité utilisant un fluide magnétique, le dispositif d'étanchéité étant adapté pour sceller un côté sous vide et un côté sous atmosphère, et disposé entre le boîtier (2) et l'arbre rotatif (1),
le dispositif d'étanchéité étant équipé d'un joint à fluide magnétique (3) disposé dans la partie centrale axiale à l'intérieur dudit boîtier, et de roulements à billes (20) disposés des deux côtés dudit joint à fluide magnétique (3) ;
une partie lubrifiée desdits roulements à billes (20) des deux côtés étant remplie d'un fluide magnétique (26) ;
dans lesdits roulements à billes (20) des deux côtés, un aimant (24) étant installé sur le côté sous vide d'un chemin extérieur (21) du roulement à billes (2) disposé sur le côté sous vide, et un aimant (24) étant installé du côté sous atmosphère d'un chemin extérieur (21) du roulement à billes disposé du côté sous atmosphère ; **caractérisé en ce que**
sur chacun desdits aimants (24) sur le côté opposé de ceux-ci par rapport au chemin extérieur (21) du roulement à billes (20), une culasse de forme annulaire (25) constituée de matériau magnétique étant installée de manière lâche autour de l'arbre rotatif (1) ; et
un circuit magnétique étant formé sur un trajet passant de l'aimant à travers la culasse de forme annulaire et le chemin intérieur, les billes et le chemin extérieur du roulement à billes, et revenant jusqu'à l'aimant, dans lequel le circuit magnétique est configuré pour piéger des particules entre la culasse de forme annulaire et le chemin intérieur.

3. Dispositif comprenant un boîtier (2), un arbre rotatif (1) et un dispositif d'étanchéité utilisant un fluide magnétique, le dispositif d'étanchéité étant adapté pour sceller un côté sous vide et un côté sous atmosphère, et disposé entre le boîtier (2) et l'arbre rotatif (1),
le dispositif d'étanchéité étant équipé de deux roulements à billes (20) disposés espacés de manière à supporter ledit arbre rotatif (1) d'une manière à double support à l'intérieur dudit boîtier (2) ;
une partie lubrifiée du roulement à billes (20) qui, parmi lesdits deux roulements à billes (20), est le roulement à billes (20) disposé sur le côté sous vide étant remplie d'un fluide magnétique (26), et un aimant (24) étant installé sur le côté sous vide d'un chemin extérieur (21) ; **caractérisé en ce que**
sur ledit aimant (24) sur le côté opposé de celui-ci par rapport au chemin extérieur (21) du roulement à billes (20), une culasse de forme annulaire (25) constituée de matériau magnétique étant installée de manière lâche sur l'arbre rotatif (1) ; et
un circuit magnétique étant formé sur un trajet passant de l'aimant à travers la culasse de forme annulaire et le chemin intérieur, les billes, et le chemin extérieur du roulement à billes, et revenant jusqu'à l'aimant, dans lequel le circuit magnétique est configuré pour piéger des particules entre la culasse de forme annulaire et le chemin intérieur.

4. Dispositif comprenant un boîtier (2), un arbre rotatif (1) et un dispositif d'étanchéité utilisant un fluide magnétique, le dispositif d'étanchéité étant adapté pour sceller un côté sous vide et un côté sous atmosphère, et disposé entre le boîtier (2) et l'arbre rotatif (1),
le dispositif d'étanchéité étant équipé de deux roulements à billes (20) disposés espacés de manière à supporter ledit arbre rotatif (1) d'une manière à double support à l'intérieur dudit boîtier (2) ;
une partie lubrifiée desdits deux roulements à billes (20) des deux côtés étant remplie d'un fluide magnétique (26) ;
dans lesdits deux roulements à billes (20), un aimant (24) étant installé sur le côté sous vide d'un chemin extérieur (21) du roulement à billes (2) disposé sur le côté sous vide, et un aimant (24) est installé du côté sous atmosphère d'un chemin extérieur (21) du roulement à billes (20) disposé du côté sous atmosphère ; **caractérisé en ce que**
sur chacun desdits aimants (24) respectifs sur le côté opposé de ceux-ci par rapport au chemin extérieur (21) dudit roulement à billes (20), une culasse de forme annulaire (25) constituée de matériau magnétique étant installée de manière lâche autour de l'arbre rotatif (1) ; et
un circuit magnétique étant formé sur un trajet passant de l'aimant à travers la culasse de forme annulaire et le chemin intérieur, les billes, et le chemin extérieur du roulement à billes, et revenant jusqu'à l'aimant, dans lequel le circuit magnétique est configuré pour piéger des particules entre la culasse de forme annulaire et le chemin intérieur.

5. Dispositif selon l'une quelconque des revendications 1 à 4, **caractérisé en ce qu'**un blindage (34) est fourni sur le côté sous vide d'au moins le roulement à billes (20) qui, parmi lesdits roulements à billes (20), est le roulement à billes (20) disposé sur ledit côté sous vide.

6. Dispositif selon l'une quelconque des revendications 1 à 5, **caractérisé en ce que** la forme en coupe transversale de ladite culasse (25) est en forme de « I ».

7. Dispositif selon l'une quelconque des revendications 1 à 6, **caractérisé en ce que** la forme en coupe transversale de ladite culasse (25) est une forme en « L », conçue de telle sorte que la section verticale (25-1) de ladite forme en « L » est en contact avec un aimant (24), et la section horizontale (25-2) est opposée à une surface dudit arbre rotatif (1).

8. Dispositif selon la revendication 7, **caractérisé en ce que** des aspérités (27, 28) sont formées sur la section horizontale (25-2) de ladite culasse en forme de « L » (25) sur sa surface opposée à la surface dudit arbre rotatif (1).

9. Dispositif selon l'une quelconque des revendications 1 à 8, **caractérisé en ce que** ladite culasse de forme annulaire (30) est munie d'une partie en saillie (31) sur son côté faisant face audit aimant (33), ladite partie en saillie (31) étant munie dans la direction circonférentielle d'une pluralité de parties évidées (32) de forme cylindrique ou rectangulaire qui s'ouvrent vers ledit côté de chemin extérieur de roulement à billes, et d'aimants (33) qui sont montés à l'intérieur desdites parties évidées (32).
